# EUROPÄISCHE PATENTANMELDUNG

(11) **EP 2 407 029 A1**
(43) Veröffentlichungstag der Anmeldung: **18.01.2012**
(21) Anmeldenummer: 10169553.4
(22) Anmeldetag: 14.07.2010
(51) Int. Cl.: A23B 7/154, A23B 7/157, A23L 3/3463, A23L 3/3508, A23L 3/358

(54) **Waschlösung für pflanzliche Frischprodukte**

(71) Anmelder: Schneider Umwelttechnik AG, 8472 Seuzach (CH)
(72) Erfinder: Ebert, Jürgen, 9500, Wil (CH)
(74) Vertreter: Hepp Wenger Ryffel AG

(57) **Zusammenfassung**

Die Erfindung betrifft eine Waschlösung für pflanzliche Frischprodukte wie beispielsweise Salat, umfassend: (i) Wasser; (ii) mindestens ein insbesondere anionisches Antioxidationsmittel; (iii) mindestens einen Komplexbildner; und (iv) mindestens ein zweiwertiges Kation; wobei das Ionenverhältnis zwischen dem insbesondere anionischen Antioxidationsmittel und dem zweiwertigen Kation ≥ 10:1 , vorzugsweise ≥ 250:1, ganz besonders bevorzugt ≥ 500:1 ist. Mit einer derartigen Waschlösung kann die Haltbarkeit pflanzlicher Frischprodukte signifikant verbessert werden.

## Beschreibung

Die vorliegende Erfindung betrifft Verbesserungen in der Haltbarmachung von pflanzlichen Frischprodukten. Insbesondere betrifft die vorliegende Erfindung Waschlösungen oder Konzentrate für Waschlösungen für pflanzliche Frischprodukte, insbesondere für Blattgemüse, vorzugsweise für Salate, sowie Verfahren zur Behandlung besagter Frischprodukte, Trockenmischungen zur Herstellung von Waschlösungen oder Konzentraten für besagte Frischprodukte, sowie die Verwendung besagter Trockenmischungen und Waschlösungen gemäss den Präambeln der unabhängigen Ansprüche.

Pflanzliche Frischprodukte stellen die Vertreiber und Detailhändler vor besondere Herausforderungen. Der Verbraucher erwartet, dass Frischprodukte hohen Anforderungen entsprechen, insbesondere "frisch" zum Verbraucher gelangen. Allerdings ist häufig eine nicht unbeträchtliche räumliche und gegebenenfalls auch zeitliche Distanz zwischen dem Produktions- und Verarbeitungsstandort und dem Verbraucher zurückzulegen.

In vielen Bereichen hat sich zudem eine Vorkonfektionierung oder Vorbehandlung als vom Verbraucher gewünscht erwiesen. Pflanzliche Frischprodukte werden zum Beispiel bereits geschnitten, gegebenenfalls gemischt und portionenweise verpackt angeboten. Solche Frischprodukte sind in der Regel bereits gewaschen. Bereits zum Zeitpunkt der Ernte setzt bei Frischprodukten der natürliche biologische Zerfall ein. Produzenten, Verteiler und Detaillisten lösen dieses Problem durch eine ausgefeilte Logistik, die bestrebt ist, den Transportweg und die Lagerzeit, bis das Produkt den Verbraucher erreicht, möglichst gering zu halten. In vielen Fällen wird auch eine rigorose Kühlkette aufrechterhalten.

Dennoch kommt es bei Frischprodukten rasch zu Beeinträchtigungen der Optik und des Geschmacks. Dies gilt umso mehr bei bereits geschnittenen Frischprodukten. Pflanzenzellen enthalten Enzyme, die beim Zerstören freigesetzt werden. Die freigesetzten Enzyme oxydieren ursprünglich farblose Substanzen der pflanzlichen Frischprodukte. Es kommt zu Verfärbungen (Braunfärbung), sowie zu geschmacklichen und sonstigen sensorischen Einbussen. Es kommt zu einem gärigen, säuerlichen, erdigen, flachen oder fremden Geschmack und Geruch des Frischproduktes. Auch die Konsistenz leidet und kann bis zu schleimig werden.

Solche Produkte finden beim Verbraucher keinen Anklang.

Neben konventionellen Verfahren, um die Haltbarkeit pflanzlicher Frischprodukte zu erhöhen - wie das besagte Aufrechterhalten einer intakten Kühlkette, kurze Transportwege, sowie das Verarbeiten und Verpacken unter Schutzatmosphäre, wurden bereits Waschlösungen mit verschiedenen Zusätzen vorgeschlagen.

Solchen Zusätzen ist als Grundvoraussetzung gemeinsam, dass sie für den Verbraucher gesundheitlich unbedenklich sein und auch sonst eine gewisse Verbraucherakzeptanz aufweisen müssen.

DE 3624035A1 offenbart ein Mittel zum Frischhalten von Gemüse, Salat und Schnittobst. Das Frischhaltemittel besteht zu 15 - 40 Gewichtsanteilen aus Ascorbinsäure. Weiter wird Calciumchlorid (15 Gewichtsanteile) und Zitronensäure (45 - 80 Gewichtsanteile) zugegeben.

EP 16598887B1 offenbart ebenfalls ein Verfahren zum Konservieren frischer Produkte. Eine wässrige Lösung wird oberflächlich auf die Frischprodukte aufgetragen. Die wässrige Lösung enthält ein konservierendes Kation, Ascorbationen, oder Erythorbationen. Wesentlich ist ein Verhältnis zwischen Anion und Kation von zwischen 0,2 zu 1 bis 8 zu 1.

WO 2004/093574A1 offenbart ein alternatives Verfahren zur Ausdehnung der Lagerbeständigkeit von geerntetem Pflanzenmaterial. Dazu finden L-Ascorbinsäureester Verwendung. Diese dienen als Antioxidantien.

Es ist somit Aufgabe der vorliegenden Erfindung, die Nachteile des Bekannten zu überwinden, insbesondere Mittel bereitzustellen, die die Haltbarkeit von Frischprodukten ohne eine Einbusse der Konsumentenakzeptanz signifikant zu erhöhen vermögen.

Diese Aufgabe wurde mit einer Waschlösung, einem Verfahren zur Behandlung pflanzlicher Frischprodukte, einer Trockenmischung zur Herstellung einer Waschlösung und einer Verwendung einer Trockenmischung oder einer Waschlösung gemäss den unabhängigen Ansprüchen gelöst.

Ein Aspekt der vorliegenden Erfindung betrifft eine Waschlösung für pflanzliche Frischprodukte. Die Waschlösung kann gebrauchsfertig vorliegen oder als Konzentrat zur späteren Verdünnung mit Wasser.

Die Waschlösung umfasst Wasser (bspw. gewöhnliches Leitungswasser), mindestens ein bevorzugt anionisches Antioxidationsmittel und mindestens einen Komplexbildner. Die Waschlösung umfasst weiterhin mindestens ein zweiwertiges Kation und sie weist ein Ionenverhältnis zwischen dem anionischen Antioxidationsmittel und dem zweiwertigen Kation von ≥ 10 : 1, vorzugsweise ≥ 200 : 1, besonders bevorzugt ≥ 500 : 1 auf.

Unter pflanzlichen Frischprodukten werden in der vorliegenden Anmeldung sinngemäss Produkte für den menschlichen Verbrauch pflanzlichen Ursprungs gemeint. Insbesondere handelt es sich hierbei um Blattgemüse oder Salat. Zu den Blattgemüsen zählen zum Beispiel verschiedene Gemüsearten, deren Blätter und Stiele zum Verzehr geeignet sind. Zu den Blattgemüsen zählen unter anderem Eisbergsalat, Chicoree, Endivie, Feldsalat, Kopfsalat, Löwenzahn, Mangold, Pflücksalat, Schnittsalat, Petersilie, Rhabarber, Spargel, Spinat, Rübstiel und Ruccola.

Die Frischprodukte können in geerntetem Zustand bereits einen oder mehrere Schnitte enthalten. Von besonderem Interesse ist die vorliegende Erfindung allerdings für pflanzliche Frischprodukte, welche einer Vorkonfektionierung und Vorbehandlung unterzogen wurden. Insbesondere geeignet ist die vorliegende Waschlösung für geschnittenes Blattgemüse. In der industriellen Fertigung ist es üblich, dass das Blattgemüse in mundgerechte Portionen zerkleinert, beispielsweise geschnitten, und portionsweise verpackt in den Verkauf gelangt. Durch die Schnitte an den Blattstrukturen des Blattgemüses wird die Angriffsfläche für Enzyme und Organismen geboten, die insgesamt der Frische des Produktes abträglich sind.

Um der Oxidation entgegenzuwirken verfügt die besagte Waschlösung über mindestens ein insbesondere anionisches Antioxidationsmittel. Antioxidationsmittel, auch Oxidationshemmer genannt, werden in Lebensmitteln gebräuchlich eingesetzt, um die Reaktion mit Luftsauerstoff zu unterbinden. Antioxidationsmittel können synthetischen oder natürlichen Ursprungs sein. Unter einem anionischen Antioxidationsmittel wird verstanden, dass das verwendete Antioxidationsmittel einen pKs Wert von ≤ 7, vorzugsweise von ≤ 6, besonders bevorzugt von ≤ 5 aufweist. Somit handelt es sich in der vorliegenden Erfindung um ein saures Antioxidationsmittel.

Unter einem Komplexbildner wird eine Substanz verstanden, welche in der Lage ist, mit einem zu koordinierenden Zentralatom eine Komplexverbindung einzugehen. Dabei entsteht eine koordinative Bindung zwischen dem Liganden (Komplexbildner) und dem zu koordinierenden Zentralatom.

Dem Fachmann sind verschiedene Komplexbildner bekannt. Zu den erfindungsgemäss besonders geeigneten Komplexbildnern zählen unter anderem Gluconsäure, Weinsäure und Zitronensäure. Die Komplexbildner können als Salze vorliegen.

In einer bevorzugten Ausführungsform ist der Komplexbildner eine organische Säure, besonders bevorzugt eine Hydrocarbonsäure.

Unter einem zweiwertigen Kation sei sinngemäss zu verstehen, dass ein Salz verwendet wird, welches in einer Lösung zwei positive Ladungen aufweist.

Mit der vorliegenden Waschlösung wurde völlig überraschend eine signifikante Erhöhung der Haltbarkeit von Frischprodukten gezeigt. Insbesondere wurde ein erheblicher synergistischer Effekt zwischen den einzelnen Komponenten der Waschlösung für diesen Effekt verantwortlich gemacht. Die Waschlösung ist ausserdem toxikologisch unbedenklich und weist eine hohe Verbraucherakzeptanz auf.

In einer besonders bevorzugten Ausführungsform wird 2,3-Dihydroxybutandisäure (Weinsäure) verwendet.

Ohne an die Theorie gebunden zu sein, wird angenommen, dass die Stabilisierung einer niedrigen Oxydationsstufe des Kations durch den Komplexbildner die vorteilhaften Eigenschaften der vorliegenden Waschlösung verantwortet.

In einer weiteren bevorzugten Ausführungsform ist das anionische Antioxdationsmittel eine organische Säure, insbesondere eine Ascorbinsäure.

Ascorbinsäure oder ihr Anion, das Ascorbat, wird gängigerweise als Antioxidationsmittel eingesetzt. Es handelt sich um ein sowohl natürlich vorkommendes wie auch künstlich herstellbares Antioxidationsmittel, welches eine breite Verwendung in der Lebensmitteltechnologie findet. Ascorbinsäure und ihr Salz gelten als weitgehend unbedenklich, sogar als gesundheitsförderlich. Ascorbinsäure (Vitamin C) wird zahllosen Lebensmitteln beigegeben. Isoascorbinsäure kann ebenfalls verwendet werden.

In einer weiteren besonderen Ausführungsform weisst die Waschlösung oder das Konzentrat mindestens eine Fruchtsäure auf. Zu den Fruchtsäuren zählen unter anderem Apfelsäure, Zitronensäure, Fumarsäure, Gluconsäure, Glycolsäure, Mandelsäure, Milchsäure, Oxalsäure, Salicylsäure, α-Hydroxcaprylsäure und Weinsäure.

Diese Säuren sind dem Fachmann mit ihren Trivialnamen hinlänglich bekannt.

In einer besonders bevorzugten Ausführungsform ist das zweiwertige Kation ein Metallkation. Insbesondere die zweiwertigen Metallkationen aus den Übergangsmetallen haben sich als besonders vorteilhaft erwiesen. Besonders bevorzugt wird Fe²⁺ verwendet, aufgrund gesundheitlicher Unbedenklichkeit und geeigneten Trinkwassergrenzwerten; Mn²⁺ kann ebenfalls vorteilhaft verwendet werden (Toleranzwert Eisen in Trinkwasser: 0.3 mg/l; Toleranzwert Mangan in Trinkwasser: 0.05 mg/l. Quelle: Kantonales Labor Zürich). Im Rahmen der Erfindung können ebenfalls, wenn auch weniger bevorzugt, Cr(II) und Co(II)-Salze verwendet werden.

Bei der Auswahl des Metallkations gilt es darauf zu achten, dass das Metallkation in geringen Dosen für den menschlichen und tierischen Organismus sowie umweltökologisch unbedenklich ist. Richtlinien für die Trinkwasserversorgung können hier als Leitfaden dienen. Ein Gehalt an Metallkationen, welcher gleich hoch oder gar geringer ist als die empfohlene Höchstgrenze für Trinkwasser kann als weitgehend unschädlich für den menschlichen Organismus angesehen werden.

Das Übergangsmetall wird vorzugsweise als Metallsalz der Waschlösung zugegeben. Bei neutralem pH-Wert löst sich das Salz im Wesentlichen vollständig auf. Besonders geeignet ist im Fall von Fe²⁺ die Verwendung von "Mohrschem Salz", respektive Ammonium-eisen(II)-sulfat. Alternativ kann auch Eisen(II)-gluconat, Eisen(II)-citrat, Eisen(II)-sulfat oder Eisenlactat verwendet werden. Allen diesen Metallsalzen ist gemein, dass sie in lebensmittelgemässer Dosierung für den Menschen unbedenklich sind. Besonders bevorzugt enthält die fertige Waschlösung zwischen 0.01 und 1 mg/L an zweiwertigem Kation. Besonders bevorzugt zwischen 0.05 und 0.5 mg/L, weiter besonders bevorzugt zwischen 0.1 und 0.3 mg/L.

In einer weiteren bevorzugten Ausführungsform besteht die erfindungsgemässe Waschlösung aus Ascorbinsäure (oder Isoascorbinsäure) und mindestens zwei, insbesondere drei weiteren Fruchtsäuren, wobei mindestens eine der weiteren Fruchtsäuren als Komplexbildner fungieren kann. Besonders bevorzugt umfasst die Waschlösung Ascorbinsäure, Apfelsäure, Zitronensäure und Weinsäure. Der Waschlösung wird zudem ein Eisen(II)salz zugegeben. Besonders geeignet ist Ammoniumeisen(II)-sulfat oder Eisen(II)-citrat.

Eine derzeit im Rahmen der Erfindung besonders bevorzugte Waschlösung wird hergestellt aus einer Trockenmischung aus 10 Gew.% Ascorbinsäure, 60 Gew.% Citronensäure und 30 Gew.% Weinsäure (alternativ: 10 Gew.% Ascorbinsäure, 20 Gew.% Äpfelsäure, 35 Gew. % Citronensäure und 35 Gew. % Weinsäure; oder 5 Gew. % Ascorbinsäure, 20 Gew.% Äpfelsäure, 35 Gew.% Citronensäure und 40 Gew.% Weinsäure). Eine derartige Trockenmischung wird mit Wasser zu einer gebrauchsfertigen Waschlösung verdünnt (typischerweise 0.1% G/V oder auch 0.3% G/V) sowie mit Fe(II) versetzt (bspw. durch Zugabe einer entsprechenden Menge Ammoniumeisen(II)-sulfat), typischerweise in einer Menge von 0.1 mg/L.

Ein weiterer Aspekt der vorliegenden Erfindung betrifft ein Verfahren zur Behandlung pflanzlicher Frischprodukte. Hierbei wird unter der Behandlung pflanzlicher Frischprodukte wiederum auch die Behandlung von Blattgemüse, Salaten und Schnittblumen wie oben bereits beim vorangegangenen Aspekt hinlänglich erläutert verstanden.

Eine Waschlösung aus Wasser, mindestens einem insbesondere anionischen Antioxidationsmittel, mindestens einem Komplexbildner und mindestens einem zweiwertigen Kation wie vorgängig beschrieben wird bereitgestellt. Die Waschlösung wird auf ein zu behandelndes pflanzliches Frischprodukt aufgetragen.

Verfahren zum Auftragen von Waschlösungen auf pflanzliches Frischgut sind in der einschlägigen Produktions- und Verarbeitungsbranche hinlänglich bekannt. Beispielsweise kann das zu behandelnde Frischgut mit der entsprechenden Waschlösung abgespritzt, berieselt oder anderweitig benetzt werden. Das zu bearbeitende Frischgut kann allerdings auch in ein vorbereitetes Bad aus der Waschlösung ganz oder zumindest teilweise getaucht werden.

Bevorzugt wird das pflanzliche Frischprodukt vorgängig mit handelsüblichen Methoden geschnitten, zerhackt oder zerteilt / zerrissen.

Im Anschluss an die geschilderte Waschung kann das Frischprodukt oberflächlich von der Waschlösung zumindest teilweise wieder befreit werden. Dies kann durch eine Trockenschleuder oder ein Trockengebläse, durch abschütteln oder abtropfen geschehen.

Entsprechende Verfahren und Vorgehensweisen sind dem Fachmann an sich hinlänglich bekannt.

In einer bevorzugten Ausführungsform wird die Waschlösung für eine bestimmte Einwirkzeit am Frischprodukt belassen. Die Einwirkzeit kann zwischen 5 und 600 Sekunden betragen. Vorzugsweise zwischen 30 und 360 betragen, besonders bevorzugt zwischen 60 und 120 Sekunden betragen.

In einer besonderen Ausführungsform wird das Frischprodukt im Anschluss verpackt. Dabei kann das Frischprodukt in entsprechenden verbrauchergerechten Portionen oder in grösseren Chargen abgepackt werden. In einer besonderen Ausführungsform wird das Frischprodukt zudem vorgängig gemischt, um eine entsprechende Salat- oder Gemüsemischung zu erhalten. Übliche Verpackungsmaterialien können im Rahmen der Erfindung verwendet werden, bspw. Frischhaltebeutel oder -boxen, Gefrierbeutel oder -boxen, perforierte Verpackungsmaterialien, etc.; eine spezielle Schutzgasatmosphäre kann vorgesehen sein, ist jedoch für den Erfolg der Erfindung nicht zwingend.

Vorrichtungen und Verfahren zur Verpackung von geschnittenen und ungeschnittenen Frischprodukt sind dem Fachmann bekannt.

Bevorzugt findet das gesamte Verfahren unter Kühlbedingungen statt, das heisst bei einer Temperatur von zwischen 0 und 10°C, bevorzugt bei einer Temperatur von zwischen 6 und 8°C.

Ein weiterer Aspekt der vorliegenden Erfindung betrifft eine Trockenmischung zur Herstellung einer Waschlösung oder eines Konzentrates für eine Waschlösung für pflanzliche Frischprodukte. Eine vorbereitete Trockenmischung kann so vor Ort beim Produzenten in Wasser gelöst und anschliessend als Waschlösung wie eingangs beschrieben verwendet werden.

Die Trockenmischung umfasst mindestens ein, insbesondere aniononisches, Antioxidationsmittel, mindestens einen Komplexbildner sowie mindestens ein zweiwertiges Kation wie eingangs beschrieben. Ausserdem ist das Ionenverhältnis zwischen dem anionischen Antioxidationsmittel und dem zweiwertigen Kation ≥ 10 : 1, vorzugsweise ≥ 200 : 1, besonders bevorzugt ≥ 500 : 1 auf.

Ein weiterer Aspekt der vorliegenden Erfindung betrifft die Verwendung einer Trockenmischung zur Herstellung einer Waschlösung oder eines Konzentrates für eine Waschlösung für pflanzliche Frischprodukte. Die vorangehend beschriebene Trockenmischung wird hierbei in Wasser gelöst. Vorzugsweise werden 0,1 bis 10 g der Trockenmischung pro Liter Wasser gelöst. Besonders bevorzugt werden zwischen etwa 1,0 bis 3,0 g der Trockenmischung pro Liter Wasser gelöst.

Ein weiterer Aspekt der vorliegenden Erfindung betrifft die Verwendung der vorstehend beschriebenen Waschlösung zur Verbesserung der Haltbarkeit von pflanzlichen Frischprodukten. Hierbei kann insbesondere die Haltbarkeit von Blattgemüse, beispielsweise Salaten verbessert werden. Die Waschlösung wird auf das zu behandelnde Frischprodukt oder Mischung aus Frischprodukten aufgetragen.

Anschliessend wird die Waschlösung im Wesentlichen wieder vom Frischprodukt entfernt.

Ebenfalls geeignet ist die Anwendung der erfindungsgemässen Waschlösung für Schnittblumen. Hierbei werden nur die Stiele der Schnittblumen in einer erfindungsgemässen Waschlösung gelagert (wie sonst Schnittblumen mit den Stielen, insbesondere den Stielenden, in gewöhnlichem Leitungswasser gelagert werden). Gemäss "Schnittblumen frisch halten - in Produktion, Handel und zu Hause" (ISBN 978-3-8308-0788-9; S. 37) wird beim Eintreffen der Blumen beim Facheinzelhandel in erster Linie geprüft, ob die Blumen frisch sind. Dies erkennt man "[...] am Stielende. Das Stielende sollte nicht verbräunt sein." Sowohl unmittelbar bei/nach der Ernte als auch beim Transport sollten die Blumen stets in wassergefüllten Behältern aufbewahrt werden. Die erfindungsgemässe Waschlösung kann hierbei in der Lieferkette und beim Endverbraucher analog verwendet werden wie ansonsten gewöhnliches Leitungswasser (das ggf. ebenfalls mit Blumenfrischhaltemitteln versetzt ist).

Im Folgenden wird die vorliegende Erfindung anhand konkreter Beispiele eingehend erläutert, ohne dass die Erfindung allerdings auf diese Beispiele beschränkt ist.

Die folgenden Chemikalien wurden verwendet:
Ammoniumeisen(II)-sulfat hexahydrat (Merck, puriss. p.a. ≥ 99.0%)
Zitronensäure (Sigma-Aldrich, puriss. p.a.)
L-Ascorbinsäure (Sigma-Aldrich, puriss. p.a. ≥ 99.0%)
Apfelsäure (Sigma-Aldrich)
Weinsäure (Sigma-Aldrich)

Waschlösungen wurden in den folgenden Beispielen 1 bis 4 hergestellt aus Ascorbinsäure, Apfelsäure, Zitronensäure und Weinsäure:

### Beispiel 1:

Eine trockene Säuremischung wurde hergestellt aus 5 Gew% Ascorbinsäure, 20 Gew% Apfelsäure, 35 Gew% Zitronensäure und 40 Gew% Weinsäure.

3g der Säuremischung wurden in 1L Wasser gelöst und mit 0.07 mg Fe(II) (entspricht 0.492 mg Ammoniumeisen(II)-sulfat hexahydrat) versetzt.

### Beispiel 2:

Eine trockene Säuremischung wurde hergestellt aus 5 Gew% Ascorbinsäure, 20 Gew% Apfelsäure, 35 Gew% Zitronensäure und 40 Gew% Weinsäure.

3g der Säuremischung wurden in 1L Wasser gelöst. Der Lösung wurden 0.7 mg Eisen(II) (entspricht 4.92 mg Ammoniumeisen(II)-sulfat hexahydrat) zugegeben.

### Beispiel 3:

Eine trockene Säuremischung wurde hergestellt aus 5 Gew% Ascorbinsäure, 20 Gew% Apfelsäure, 35 Gew% Zitronensäure und 40 Gew% Weinsäure.

1g der Säuremischung wurden in 1L Wasser gelöst. Der Lösung wurden 0.1 mg Eisen(II) (entspricht 0.702 mg Ammoniumeisen(II)-sulfat hexahydrat) zugegeben.

### Beispiel 4:

Eine trockene Säuremischung wurde hergestellt aus 10 Gew% Ascorbinsäure, 20 Gew% Apfelsäure, 35 Gew% Zitronensäure und 35 Gew% Weinsäure.

3g der Säuremischung wurden in 1L Wasser gelöst. Der Lösung wurden 0.1 mg Eisen(II) (entspricht 0.702 mg Ammoniumeisen(II)-sulfat hexahydrat) zugegeben.

Waschlösungen wurden in den folgenden Beispielen 5 und 6 hergestellt aus Ascorbinsäure, Zitronensäure und Weinsäure:

### Beispiel 5:

Zuerst wurde eine trockene Säuremischung hergestellt aus 10 Gew% Ascorbinsäure, 60 Gew% Zitronensäure und 30 Gew% Weinsäure.

3g der Säuremischung wurden in 1L Wasser gelöst. Der Lösung wurden 0.1 mg Eisen(II) (entspricht 0.702 mg Ammoniumeisen(II)-sulfat hexahydrat) zugegeben.

### Beispiel 6:

Eine trockene Säuremischung wurde hergestellt aus 10 Gew% Ascorbinsäure, 60 Gew% Zitronensäure und 30 Gew% Weinsäure.

1g der Säuremischung wurden in 1L Wasser gelöst. Der Lösung wurden 0.1 mg Eisen(II) (entspricht 0.702 mg Ammoniumeisen(II)-sulfat hexahydrat) zugegeben.

### Behandlung von pflanzlichen Frischprodukten

250g Kopfsalat wurde in kleine Scheiben geschnitten. Der geschnittene Salat wurde während 1 bis 2 Minuten mit 1L Waschlösung gemäss Beispielen 1 bis 6 gewaschen. Anschliessend wurde der gewaschene Salat 10 mal mit einer handelsüblichen Salatschleuder mit Schwungband geschleudert.

Der Salat wurde anschliessend sowohl in einen konventionellen Plastikbeutel als auch in spezielle Salatverpackungen unter Raumatmosphäre eingeschweisst und in einem Kühlschrank bei 6 bis 8°C gelagert.

Der obige Vorgang wurde für jede Beispielslösung 5 mal wiederholt.

Nach 1, nach 11, nach 14, nach 17 und anschliessend auch 23 Tagen wurde je 1 Beutel geöffnet und beurteilt.

Die Proben wurden mit Indikatoren 1 bis 5 bewertet:
0 = gar nicht ausgeprägt
1 = sehr schwach ausgeprägt
2 = schwach ausgeprägt
3 = deutlich ausgeprägt
4 = stark ausgeprägt
5 = sehr stark ausgeprägt

Die Proben wurden nach optischen, olfaktorischen, geschmacklichen und sensorischen Kriterien beurteilt. Bei der optischen Beurteilung wurden allgemeine optische Merkmale wie z.B. braune Stellen, frisches, farbechtes oder wässriges Aussehen sowie trockene Schnittstellen bewertet.

Beim Öffnen des Frischhaltebeutels und vor der Verköstigung wurde auf gärigen, säuerlichen, erdigen oder muffigen Geruch geachtet. Beim Verköstigen wurde auf gärigen, säuerlichen, erdigen, flachen oder fremden Beigeschmack geachtet. Bei der Sensorik wird beim Verköstigen auf die Bissfestigkeit geachtet.

Die Ergebnisse sind in nachfolgender Tabelle dargestellt, in Gegenüberstellung zu den Vergleichsversuchen 1 bis 9; die erfindungsgemässen Vorteile, wie vorstehend erläutert, sind aus den Versuchsergebnissen ersichtlich.

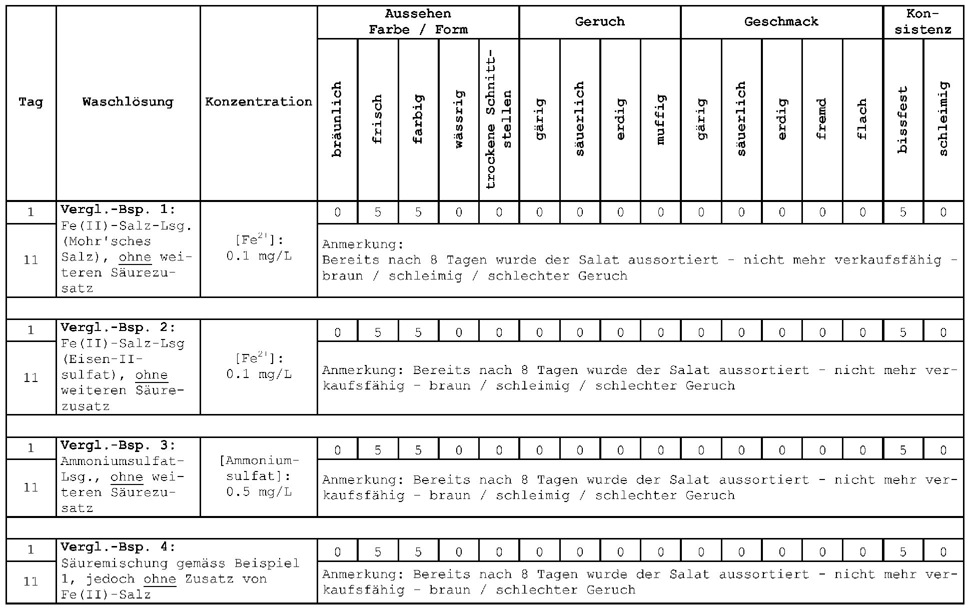

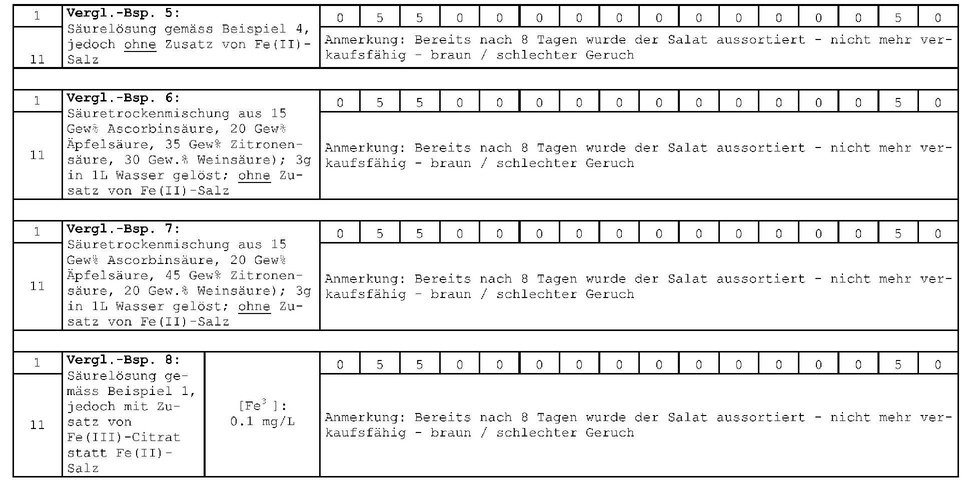

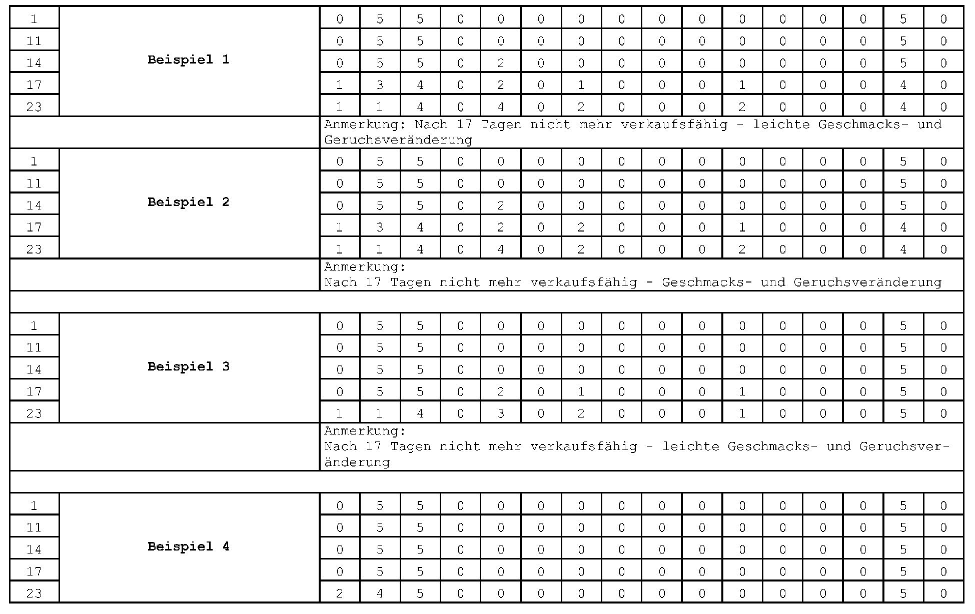

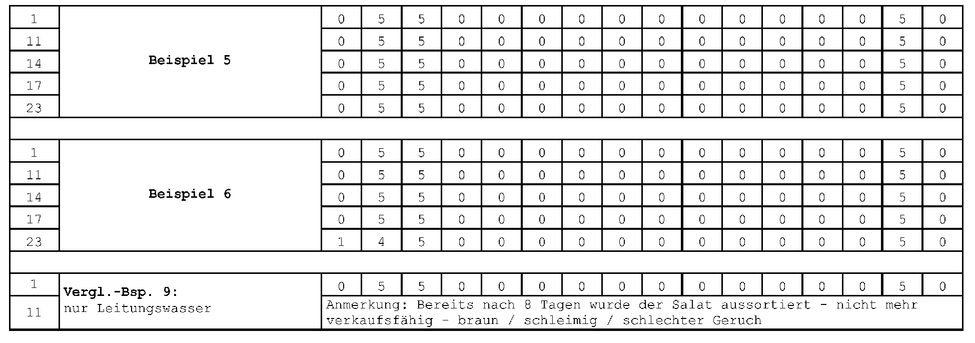

## Patentansprüche

1. Waschlösung oder Konzentrat für eine Waschlösung für pflanzliche Frischprodukte, insbesondere für Blattgemüse, vorzugsweise Salat, umfassend:
(i) Wasser;
(ii) mindestens ein insbesondere anionisches Antioxidationsmittel;
(iii) mindestens einen Komplexbildner;
(iv) mindestens ein zweiwertiges Kation;
wobei das Ionenverhältnis zwischen dem insbesondere anionischen Antioxidationsmittel und dem zweiwertigen Kation ≥ 10:1, vorzugsweise ≥ 250:1, ganz besonders bevorzugt ≥ 500:1 ist.

2. Waschlösung oder Konzentrat für eine Waschlösung gemäss Anspruch 1, **dadurch gekennzeichnet, dass** der Komplexbildner eine organische Säure, insbesondere eine Hydrocarbonsäure, vorzugsweise 2,3-Dihydroxybutandisäure ist.

3. Waschlösung oder Konzentrat für eine Waschlösung gemäss einem der Ansprüche 1 bis 2, **dadurch gekennzeichnet, dass** das insbesondere anionische Antioxidationsmittel eine organische Säure, insbesondere Ascorbinsäure oder Isoascorbinsäure ist.

4. Waschlösung oder Konzentrat für eine Waschlösung gemäss einem der Ansprüche 1 bis 3, weiter umfassend mindestens eine Fruchtsäure, insbesondere eine Fruchtsäure ausgewählt aus der Gruppe: Äpfelsäure, Citronensäure, Fumarsäure, Gluconsäure, Glycolsäure, Mandelsäure, Milchsäure, Oxalsäure, Salicylsäure, α-Hydroxycaprylsäure und Weinsäure, sowie Kombinationen hiervon.

5. Waschlösung oder Konzentrat für eine Waschlösung gemäss einem der Ansprüche 1 bis 4, **dadurch gekennzeichnet, dass** das zweiwertige Kation ein Metallkation ist, insbesondere ein zweiwertiges Metallkation ausgewählt aus den Übergansmetallen, vorzugsweise Fe²⁺ oder Mn²⁺.

6. Waschlösung oder Konzentrat für eine Waschlösung gemäss einem der Ansprüche 1 bis 5, wobei das zweiwertige Kation in einer Menge von zwischen 0.01 und 1 mg/L enthalten ist.

7. Verfahren zur Behandlung pflanzlicher Frischprodukte, insbesondere zur Verbesserung der Haltbarkeit von Blattgemüse, umfassend die Schritte:
(i) Bereitstellen einer Waschlösung gemäss einem der Ansprüche 1 bis 6;
(ii) In Kontakt bringen der Waschlösung mit einem pflanzlichen Frischprodukt, insbesondere einem Blattgemüse, vorzugsweise einem Salat.

8. Verfahren gemäss Anspruch 7, wobei das Blattgemüse vor Schritt (ii) geschnitten wird.

9. Verfahren gemäss einem der Ansprüche 7 oder 8, wobei das Blattgemüse nach Schritt (ii) oberflächlich im Wesentlichen wieder getrocknet, insbesondere trockengeschleudert oder trockengeblasen wird.

10. Verfahren gemäss einem der Ansprüche 7 bis 9, wobei die Waschlösung mit dem Blattgemüse für eine Dauer zwischen 5 und 600 Sekunden, vorzugsweise zwischen 30 und 360 Sekunden in Kontakt gebracht wird.

11. Verfahren gemäss einem der Ansprüche 7 bis 10, wobei das Verfahren unter Kühlbedingungen, d.h. bei einer Temperatur von zwischen 0 und 10 °C, insbesondere zwischen 6 und 8 °C durchgeführt wird.

12. Trockenmischung zur Herstellung einer Waschlösung oder eines Konzentrates für eine Waschlösung für pflanzliche Frischprodukte, insbesondere für Blattgemüse, vorzugsweise Salat, umfassend:
(i) mindestens ein insbesondere anionisches Antioxidationsmittel;
(ii) mindestens einen Komplexbildner;
(iii) mindestens ein zweiwertiges Kation;
wobei das Ionenverhältnis zwischen dem insbesondere anionischen Antioxidationsmittel und dem zweiwertigen Kation ≥ 10:1, vorzugsweise ≥ 250:1, ganz besonders bevorzugt ≥ 500:1 ist.

13. Verwendung einer Trockenmischung gemäss Anspruch 12 zur Herstellung einer Waschlösung oder eines Konzentrates für eine Waschlösung für pflanzliche Frischprodukte, insbesondere für Blattgemüse, vorzugsweise Salat, wobei eine Trockenmischung gemäss Anspruch 12 in Wasser gelöst wird, vorzugsweise 0.1 bis 10 g der Trockenmischung in 1 l Wasser, besonders bevorzugt 1.0 bis 3.0 g in 1 l Wasser.

14. Verwendung einer Waschlösung gemäss einem der Ansprüche 1 bis 6 zur Verbesserung der Haltbarkeit von pflanzlichen Frischprodukten, insbesondere von Blattgemüsen, vorzugsweise Salaten.

15. Verwendung eine Lösung gemäss einem der Ansprüche 1 bis 6 zur Lagerung zumindest der Schnittkanten, insbesondere der Stielenden von Schnittblumen darin.
